# FASCICULE DE BREVET EUROPEEN

(11) **EP 3 916 717 B1**
(45) Date de publication et mention de la délivrance du brevet: **06.12.2023**
(21) Numéro de dépôt: 21173044.5
(22) Date de dépôt: 10.05.2021
(51) Int. Cl.: G10K 11/172, B32B 3/12, B64C 1/40, F02K 1/34, B32B 1/00, B32B 3/06, B32B 3/08, B32B 3/26, B64D 33/02

(54) **STRUCTURE ALVÉOLAIRE D'INSONORISATION INCLUANT UN DIAPHRAGME MUNI D'UN TUBE CONFIGURÉ POUR TRAITER DIFFÉRENTES FRÉQUENCES ACOUSTIQUES, PROCÉDÉ DE FABRICATION D'UNE TELLE STRUCTURE ALVÉOLAIRE D'INSONORISATION, ET OUTIL ASSOCIÉ**
SCHALLDÄMMENDE WABENSTRUKTUR MIT EINER MEMBRAN, DIE MIT EINEM ROHR VERSEHEN IST, DAS FÜR DIE VERARBEITUNG VERSCHIEDENER AKUSTISCHER FREQUENZEN KONFIGURIERT IST, VERFAHREN ZUR HERSTELLUNG EINER SOLCHEN SCHALLDÄMMENDEN WABENSTRUKTUR UND ENTSPRECHENDES WERKZEUG
HONEYCOMB SOUNDPROOFING STRUCTURE INCLUDING A DIAPHRAGM PROVIDED WITH A TUBE CONFIGURED TO PROCESS DIFFERENT ACOUSTIC FREQUENCIES, METHOD FOR MANUFACTURING SUCH A HONEYCOMB SOUNDPROOFING STRUCTURE, AND ASSOCIATED TOOL

(30) Priorité: 29.05.2020 FR 2005672
(43) Date de publication de la demande: 01.12.2021
(73) Titulaire: AIRBUS OPERATIONS (S.A.S.), 31060 Toulouse (FR)
(72) Inventeur: PORTE, Alain, 31060 TOULOUSE Cedex 9 (FR); LALANE, Jacques, 31060 TOULOUSE Cedex 9 (FR); RAVISE, Florian, 31060 TOULOUSE Cedex 9 (FR); MERCAT, Florent, 31060 TOULOUSE Cedex 9 (FR); DOBIGEON, Franck, 31060 TOULOUSE Cedex 9 (FR)
(74) Mandataire: Jardel, Marc Henry Philippe

(56) Documents cités:
- FR-A1- 3 055 662
- GB-A- 2 005 384
- US-A1- 2015 041 248

## Description

La présente invention concerne une structure alvéolaire, et plus particulièrement une structure alvéolaire d'insonorisation.

Elle concerne aussi un procédé de fabrication d'une telle structure alvéolaire, ainsi qu'un outil pour mettre en oeuvre le procédé.

La structure alvéolaire peut avoir différentes applications, en particulier dans le domaine aéronautique, par exemple dans une nacelle d'aéronef.

Une structure alvéolaire désigne ici une structure comportant des cellules ou alvéoles, c'est-à-dire des volumes unitaires creux juxtaposés.

Une telle structure peut être réalisée en divers matériaux, par exemple plastiques, composites, ou métalliques. Les cellules peuvent présenter diverses géométries. Une forme bien connue de structure alvéolaire présente des cellules en forme de prisme droit de base hexagonale. On parle souvent de structure « en nid d'abeilles » pour désigner ce type de structure à cellules hexagonales, mais cette expression est parfois employée par abus de langage pour désigner des panneaux alvéolaires présentant toutes autres formes de cellules.

Une telle structure peut être employée dans de nombreux domaines techniques, notamment dans le domaine aéronautique.

Par exemple, une nacelle d'ensemble propulsif d'aéronef comporte généralement une entrée d'air qui est une structure acoustique devant assurer un traitement acoustique d'une partie avant de la nacelle et absorber des éventuelles nuisances sonores pouvant provenir d'une hélice d'un moteur.

L'entrée d'air comporte, traditionnellement, un panneau acoustique qui assure principalement le traitement acoustique et une grande partie d'un comportement aérodynamique interne de l'entrée d'air.

Le panneau acoustique peut être en composites et fabriqué en une seule pièce. Toute sa surface interne peut assurer le traitement acoustique.

Dans ce contexte, le panneau acoustique peut être dimensionné pour résister à diverses contraintes, comme par exemple une perte de pale de l'hélice, un chargement aérodynamique (surpression) sur tout un périmètre interne du panneau acoustique, un choc d'oiseau, différentes sollicitations thermiques, etc.

A ces fins, au moins une partie du panneau acoustique comprend classiquement une âme en structure alvéolaire (dit abusivement « en nid d'abeilles ») qui est configurée pour amortir des nuisances sonores, interposée entre une peau acoustique (« résistive skin ») formant une première face et une peau arrière structurale (« backing skin ») formant une deuxième face du panneau acoustique.

Un objectif de la peau acoustique est de laisser passer du bruit. Elle est par exemple composée de plusieurs couches dont une couche poreuse, présentant souvent des trous.

La peau arrière structurale a notamment pour fonction d'assurer un rôle de réflecteur acoustique, ainsi que de fortement participer à la tenue structurale du panneau acoustique.

En jouant sur une épaisseur du panneau acoustique, il est possible d'atténuer des hautes ou basses fréquences : plus le panneau est épais, plus les fréquences atténuées sont basses.

Des ensembles propulsifs utilisent parfois un moteur à fort taux de dilution qui, pour un niveau de poussée identique, présente des dimensions plus larges et plus courtes, des pales de fans de plus grandes dimensions pouvant être associées à des vitesses de rotation plus faible qu'un moteur traditionnel. Les fréquences à atténuer sont alors plus basses.

Or, les panneaux acoustiques connus dans l'état de la technique sont généralement efficaces à une fourchette étroite de fréquences dominantes de ce type de moteur seulement.

Pour atténuer des fréquences sur une gamme plus large, le brevet US 7 857 093 B2 propose par exemple de superposer deux couches de nid d'abeilles pour absorber des fréquences plus basses.

Toutefois, une telle solution entraine de fait un encombrement plus important. Une épaisseur du panneau acoustique est augmentée de façon significative, entrainant une augmentation de masse et de rigidité dudit panneau acoustique.

Le document GB2005384 divulgue un panneau acoustique incorporant des résonateurs de type Helmholtz recouvert d'une feuille présentant des ouvertures, celle-ci étant maintenue à une petite distance de l'extrémité des résonateurs à l'aide d'éléments.

Le document US2015041248 décrit une structure acoustique comprenant un nid d'abeilles dont les cellules forment avec une barrière acoustique des résonateurs acoustiques. Chaque résonateur comprend un conduit tronconique présentant une partie perméable.

Le document FR3055662 présente une structure absorbante de sons comportant un ensemble résonant comprenant une pluralité de cavités recouvertes par une peau sur laquelle sont arrangés des orifices, chaque cavité comprenant un cône dont la base est fixée à la peau. Le cône comprend au moins un trou traversant sur sa surface latérale. L'invention vise ainsi à proposer une structure acoustique permettant au moins de traiter une gamme de fréquences plus large, tout en limitant son encombrement.

A cet effet, est proposé, selon un premier aspect, une structure alvéolaire d'insonorisation comportant au moins une alvéole ayant une section de base S de forme quelconque et une hauteur H, caractérisée en ce que l'alvéole comporte un diaphragme, le diaphragme comportant une membrane, divisant l'alvéole en deux compartiments selon la hauteur H, la membrane comportant au moins une ondulation et au moins un orifice traversant une épaisseur de la membrane, et le diaphragme comportant au moins un tube, entourant l'au moins un orifice et s'étendant depuis une face de la membrane dans un des deux compartiments, le tube comportant une extrémité libre formant une sortie acoustique qui est positionnée à distance p de la section de base S.

Une telle structure alvéolaire est ainsi configurée pour traiter un spectre de fréquences acoustiques plus large qu'une structure alvéolaire sans diaphragme, c'est-à-dire de hautes et/ou basses fréquences acoustiques.

Un tel tube permet plus particulièrement de traiter de plus basses fréquences. L'un des deux compartiments dans lequel s'étend le tube est alors configuré pour traiter des fréquences basses tandis que l'autre des deux compartiments est configuré pour traiter des fréquences hautes.

Les deux compartiments communiquent alors acoustiquement, voire fluidiquement, entre eux par le tube.

Comme un dimensionnement du tube est préalablement connu, un diaphragme selon l'invention permet ainsi un dimensionnement acoustique de la structure plus simple. En outre, un tel diaphragme est plus robuste industriellement. Un tel diaphragme peut être adapté à un grand nombre d'alvéoles, différentes en forme et en dimensions.

Au besoin, le diaphragme peut comporter plusieurs tubes, par exemple entre un et dix tubes.

Un tube désigne ici un conduit présentant tout type de section, qui peut être de dimensions constantes ou pas sur la hauteur du tube, et formant une protubérance par rapport à la membrane. Il peut être cylindrique ou tronconique, à section polygonale ou circulaire.

La sortie acoustique est une partie du diaphragme configurée pour transmettre des ondes acoustiques.

Dans un exemple de réalisation, la sortie acoustique du tube comporte au moins un orifice, des micro-perforations et/ou une zone tissée.

Ainsi, à partir de la structure alvéolaire de base choisie (c'est-à-dire initialement sans diaphragme), qui peut même être standard, le diaphragme est disposé dans l'alvéole en fonction des fréquences à traiter. Il est alors possible de traiter différentes gammes de fréquences avec une même structure alvéolaire de base et un même diaphragme, en fonction de la disposition du diaphragme dans l'alvéole de la structure alvéolaire. Autrement dit, un volume de chacun des compartiments est déterminé en fonction des fréquences visées.

Eventuellement, la structure alvéolaire de base est choisie en fonction des volumes des compartiments voulus, par exemple en variant la hauteur de la structure alvéolaire. Par exemple, l'alvéole est une cellule monobloc.

L'alvéole peut être réalisée en matière synthétique, de papier ou tissage revêtu ou enduit de résine ou autre produit améliorant la rigidité et l'imperméabilité, de matière composite, par exemple en thermoplastique, ou en métal, ou autre en fonction de l'application visée.

L'alvéole est par exemple formée d'un cylindre droit, c'est-à-dire dont une génératrice est orthogonale à la section de base.

La forme de la section de base peut varier. Celle-ci est par exemple déterminée en fonction des caractéristiques mécaniques recherchées pour la structure alvéolaire. Par exemple, la section de base à une forme circulaire ou hexagonale. En cas d'alvéole hexagonale, la structure alvéolaire correspond alors à une structure en nid d'abeille à proprement parler.

Dans un exemple de réalisation, la distance p entre la section acoustique et la section de base S de l'alvéole vaut entre 20 % et 80 % de la hauteur H de l'alvéole.

Dans un exemple de réalisation, la membrane comporte au moins une ondulation.

Dans un exemple de réalisation, la structure alvéolaire d'insonorisation comporte une feuille résistive recouvrant l'alvéole d'un premier côté.

Dans un exemple de réalisation, la structure alvéolaire d'insonorisation comporte une feuille de fermeture recouvrant l'alvéole d'un deuxième côté.

Par exemple, la feuille de fermeture peut être perforée.

Est également proposé, selon un autre aspect, un aéronef comprenant au moins un ensemble propulsif comprenant une nacelle.

Par exemple, la nacelle comprend une entrée d'air comportant un panneau acoustique.

Par exemple, le panneau acoustique comporte une structure alvéolaire d'insonorisation telle que décrite précédemment.

Par exemple, une peau acoustique du panneau acoustique comporte la feuille résistive de la structure alvéolaire d'insonorisation.

Par exemple, une peau arrière du panneau acoustique, configurée pour assurer une tenue structurale du panneau acoustique, comporte la feuille de fermeture de la structure alvéolaire d'insonorisation.

Est également proposé, selon un autre aspect, un procédé de fabrication d'une structure alvéolaire d'insonorisation comportant :
- Une étape de fourniture d'au moins une alvéole ayant une section de base S de forme quelconque et une hauteur H ;
- Une étape de fourniture d'un diaphragme comportant une membrane, la membrane comportant au moins une ondulation et au moins un orifice traversant une épaisseur de la membrane,
   et le diaphragme comportant au moins un tube surmontant l'orifice, le tube comportant une extrémité libre formant une sortie acoustique ;
- Une étape de prise du diaphragme par un outil d'insertion comportant une étape de préhension d'une partie du diaphragme par l'outil d'insertion ;
- Une étape d'insertion du diaphragme dans l'alvéole par l'outil d'insertion jusqu'à positionner la sortie acoustique à une distance p de la section de base S ;
- Une étape de fixation d'une partie du diaphragme contre une paroi de l'alvéole ; et
- Une étape de relâchement du diaphragme par l'outil d'insertion.

Un tel procédé permet d'insérer différents types de diaphragmes dans différentes configurations d'alvéoles et la fixation du diaphragme dans celle-ci.

En effet, les alvéoles d'une structure alvéolaire peuvent fortement varier, notamment en forme de section et en dimensions, d'une structure alvéolaire à une autre. Parallèlement, le diaphragme à insérer peut également varier en fonction des fréquences acoustiques à traiter et de la structure alvéolaire à laquelle il est destiné.

Dans ce contexte, un tel procédé de réalisation d'une structure alvéolaire d'insonorisation, formée à partir d'au moins une structure alvéolaire dans au moins une alvéole de laquelle est inséré un diaphragme, est adaptable à différentes formes d'alvéoles et de diaphragmes.

Ainsi, à partir de la structure alvéolaire de base choisie (c'est-à-dire initialement sans diaphragme), qui peut même être standard, le diaphragme est disposé dans l'alvéole en fonction des fréquences à traiter, c'est-à-dire à une distance prédéterminée d'une section de base de l'alvéole. Il est alors possible de traiter différentes gammes de fréquences avec une même structure alvéolaire de base et un même diaphragme, en fonction de la disposition du diaphragme dans l'alvéole de la structure alvéolaire. Dans un exemple de mise en oeuvre, l'étape de préhension d'une partie du diaphragme comporte une étape d'aspiration par l'outil d'insertion.

Dans un exemple de mise en oeuvre, l'étape de relâchement comporte une étape d'arrêt d'aspiration d'une partie du diaphragme par l'outil d'insertion.

Dans un exemple de mise en oeuvre, le procédé comporte une étape de pression de la partie du diaphragme contre la paroi de l'alvéole pour sa fixation par un système d'application de pression de l'outil d'insertion.

Est aussi proposé, selon la revendication 8, un outil d'insertion d'un diaphragme dans une alvéole d'une structure alvéolaire d'insonorisation.

L'outil d'insertion comporte au moins un embout configuré pour s'insérer dans l'alvéole.

L'embout comporte au moins un système de préhension configuré pour maintenir une partie du diaphragme ou le relâcher.

Dans un exemple de réalisation, le système de préhension comporte un canal d'aspiration configuré pour être mis en dépression et maintenir une partie du diaphragme.

Dans un exemple de réalisation, l'embout comporte un système d'application de pression configuré pour plaquer une partie de la membrane contre la paroi interne de l'alvéole.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
- la figure 1 représente, selon une vue schématique en perspective, une structure alvéolaire d'insonorisation ;
- la figure 2 présente une série d'alvéoles permettant de constituer une structure alvéolaire telle que celle de la figure 1 mettant en oeuvre un exemple de réalisation selon l'invention ;
- la figure 3 montre, en coupe, une alvéole de structure alvéolaire selon un exemple de réalisation de l'invention tel que schématisé figure 2 ;
- la figure 4 est une vue en perspective d'un aéronef comportant une nacelle ayant une entrée d'air ;
- la figure 5 montre schématiquement, en éclaté, une entrée d'air de nacelle telle que représentée figure 4 ;
- la figure 6 est une coupe latérale d'un panneau acoustique d'une entrée d'air telle qu'illustrée figure 5 ;
- la figure 7 montre schématiquement une coupe d'alvéoles d'une structure alvéolaire de base, par exemple telle qu'illustrée figure 1 ;
- la figure 8 illustre une étape de prise d'un diaphragme par un outil d'insertion selon un exemple de réalisation de l'invention ;
- la figure 9 représente schématiquement deux exemples de réalisation de l'outil d'insertion selon l'invention ;
- la figure 10 illustre une étape d'insertion du diaphragme dans une alvéole en le maintenant par l'outil d'insertion, selon le mode de réalisation de la figure 8 ;
- la figure 11 représente schématiquement le diaphragme en place dans l'alvéole ;
- la figure 12 illustre une étape d'insertion du diaphragme dans une alvéole en le maintenant par un outil d'insertion selon un autre exemple de réalisation ; et
- la figure 13 montre des diaphragmes et un outil d'insertion selon d'autres exemples de réalisation de l'invention.

Les éléments identiques représentés sur les figures précitées sont identifiés par des références numériques identiques.

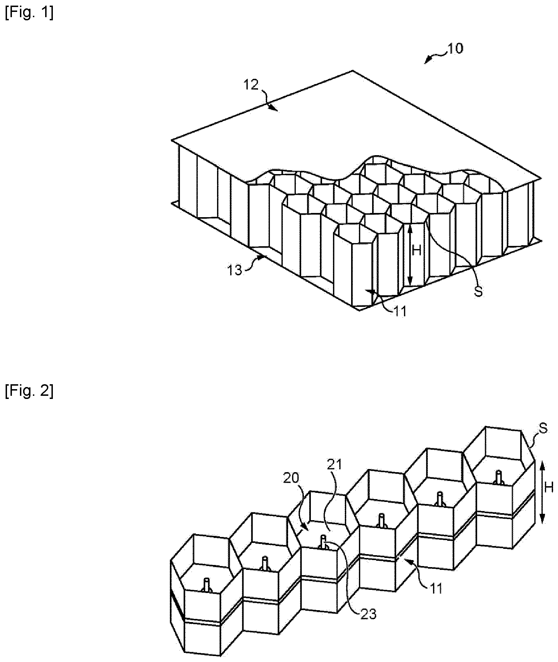

La figure 1 représente schématiquement une structure alvéolaire d'insonorisation 10 traditionnelle, ou de base.

Elle comporte des alvéoles (également désignées cellules ou cavités) 11 juxtaposées les unes aux autres selon deux directions orthogonales entre elles. Une troisième direction, orthogonale aux deux précédentes, correspond à une épaisseur de la structure alvéolaire, également définie par une hauteur H des alvéoles 11.

Dans l'exemple représenté figure 1, la structure alvéolaire est munie, d'un premier côté de la structure alvéolaire, d'une feuille résistive 12 qui recouvre les alvéoles 11. La feuille résistive 12 est éventuellement perforée. Elle forme une surface résistive permettant la communication des alvéoles 11 avec un environnement extérieur.

D'un deuxième côté de la structure alvéolaire, la structure alvéolaire est munie d'une feuille de fermeture (peau arrière) 13 qui ferme les alvéoles 11.

La feuille de fermeture 13 peut être une feuille pleine. Néanmoins, il peut s'agir d'une feuille présentant des perforations. Une feuille pleine est généralement employée pour des traitements acoustiques simples, dits SDOF (« Single Degree of Freedom ») et forme une peau arrière configurée pour réfléchir des ondes acoustiques. Une feuille de fermeture perforée est généralement employée pour des traitements acoustiques dits DDOF (« Double Degree of Freedom ») pour lesquels un empilement de deux étages de nid d'abeille est réalisé, les étages étant séparés par une peau poreuse intermédiaire formée par ladite feuille de fermeture 13.

Sur la figure 1, afin de mieux montrer la structure alvéolaire, la feuille ou couche résistive 12 est représentée ne recouvrant seulement qu'une partie des alvéoles 11. Les alvéoles 11 de la structure alvéolaire 10 ici représentées sont dites hexagonales, leur volume est celui d'un cylindre droit, de section de base S hexagonale, s'étendant entre la feuille résistive 12 et la feuille de fermeture 13 sur la hauteur H.

Les alvéoles sont en outre disposées en quinconce, en étant imbriquées les unes par rapport aux autres, ici sans définir de volume mort.

La figure 2 présente une série d'alvéoles 11 permettant de constituer une structure alvéolaire 10, analogue à que celle de la figure 1, mettant en oeuvre un exemple de réalisation selon l'invention.

Par exemple, l'alvéole 11 est une cellule monobloc.

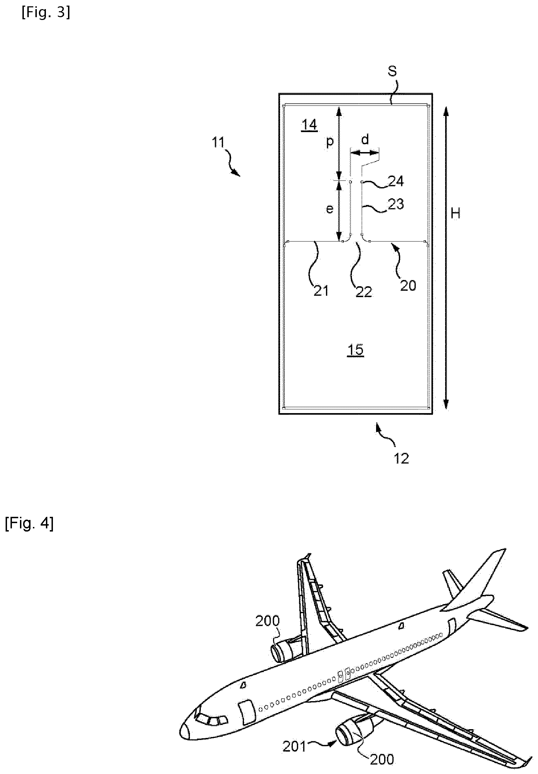

Les alvéoles 11 ont ici une section de base S hexagonale, comme celles de la figure 1, mais elles pourraient avoir toute autre forme, notamment au moins en partie circulaire. La section de base S désigne ici une section de l'alvéole à une extrémité de l'alvéole. De plus, par définition ici, l'alvéole 11 comporte une paroi interne 16 (indiquée figure 3).

Selon des formes de réalisation, l'alvéole est formée par la paroi interne 16, la feuille résistive 12 et la feuille de fermeture 13. La paroi 16 s'étend jusqu'à la feuille résistive 12. La paroi 16 s'étend à l'opposé jusqu'à la feuille de fermeture 13.

L'alvéole 11 peut être réalisée en matière synthétique, par exemple en matrice thermoplastique, papier ou tissage de fibre revêtu de résine, ou en métal, ou autre en fonction de l'application visée.

Selon l'invention, l'alvéole 11 de la figure 2 comporte un diaphragme 20 disposé selon une section de l'alvéole 11.

Le diaphragme 20 est par exemple réalisé au moins en partie en élastomère (par exemple en silicone, ...) en métal, en thermoplastique, en résine, ou autre.

Le diaphragme 20 comporte au moins une membrane 21.

La membrane 21 est par exemple collée, par un adhésif, une résine, ou brasée ou soudée dans l'alvéole 11, notamment ici à la paroi interne 16 de l'alvéole ou en bordure de celle-ci.

La membrane peut avoir un pourtour de toute forme, par exemple de forme circulaire, ce qui lui permet de s'adapter à un grand nombre de formes de section d'alvéole.

Par exemple, le diaphragme 20 obture toute une section de l'alvéole 11 dans laquelle il est disposé, soit par lui-même soit en coopération avec un adhésif ou autre matériau qui comblerait un éventuel interstice entre au moins une partie du pourtour de la membrane 21 et la paroi interne 16 de l'alvéole, de sorte que le diaphragme 20 divise l'alvéole 11 en deux compartiment 14, 15 (indiqués figure 3).

Dans un exemple de réalisation, la membrane peut présenter une dimension transverse, par exemple une diagonale ou un diamètre si elle a un pourtour de forme circulaire, inférieure ou égale à dimension correspondante de la section de l'alvéole où la membrane est disposée, laissant ainsi possiblement un interstice entre au moins une partie du pourtour de la membrane 21 et la paroi interne 16 de l'alvéole qui serait alors possiblement comblé par un adhésif ou autre.

Par exemple, la membrane 21 peut être relativement indéformable, rigide, pouvant en contrepartie présenter une plus faible épaisseur lui procurant plus de légèreté.

Un tel diaphragme est par exemple réalisé en matériau composite.

Dans un autre exemple de réalisation, le diaphragme 20 peut présenter une dimension transverse, par exemple un diamètre, supérieure à une dimension correspondante de la section de l'alvéole dans laquelle il est disposé, de sorte qu'il obture toute la section par lui-même.

De fait, pour son introduction dans celle-ci, la membrane est alors par exemple configurée pour se comprimer pour y pénétrer.

Dans un tel cas, la membrane peut comporter au moins une ondulation.

L'au moins une ondulation peut être préformée dans la membrane 21, et/ou être induite par la compression de la membrane lorsqu'elle est positionnée dans l'alvéole 11.

Un avantage à une ondulation préformée est qu'elle permet une extension de la membrane par rapport à sa position de repos, en plus de faciliter et guider des déformations en compression, selon le besoin.

Selon un exemple de réalisation, l'au moins une ondulation peut être statique.

Selon un autre exemple de réalisation, l'au moins une ondulation peut être configurée pour permettre un déploiement de la membrane.

Ceci permet notamment de fabriquer et stocker le diaphragme sur une moindre hauteur, ce qui permet un gain de place.

Une adhésion entre le diaphragme 20 et la cellule 11 de la structure alvéolaire 10 est par exemple réalisée grâce à un adhésif complété par un effet naturel de pression qu'offre la membrane 21 sur la paroi interne 16 de la cellule (la membrane cherchant revenir à son état libre une fois insérée dans l'alvéole).

Dans le cas d'une cellule 11 en matériau thermoplastique et d'un diaphragme 20 aussi en matériau thermoplastique, la liaison entre eux pourra être réalisée par soudure, sans besoin d'adhésif.

Ainsi, dans un exemple de réalisation, la membrane 21 a une souplesse et déformabilité qui sont configurées pour s'adapter aux variations de formes et de tolérances de la structure alvéolaire, soit par exemple de l'ordre de 1 à 3 mm au rayon. Le diaphragme 20 comporte en outre une zone centrale ouverte d'un point de vue acoustique, et en particulier ici un tube 23 qui s'étend depuis une face de la membrane 21.

Le tube 23 désigne ici un conduit présentant tout type de section, qui peut être de dimensions constantes ou pas sur la hauteur du tube, et formant une protubérance par rapport à la membrane. Il peut être cylindrique ou tronconique, à section polygonale ou circulaire.

Une section polygonale est par exemple hexagonale.

Par exemple, dans une structure alvéolaire à alvéoles hexagonales (NIDA classique), le tube a en particulier une section circulaire ou hexagonale.

Tandis que dans une alvéole à section autre qu'hexagonale (par exemple dans une structure alvéolaire de coeur flexible, souvent dit « flexcore »), le tube a plus particulièrement une section circulaire, et est plutôt tronconique.

Les deux compartiments ne communiquent acoustiquement entre eux que par le tube 23, la membrane 21 étant scellée sur son pourtour à la paroi interne 16 de l'alvéole 11.

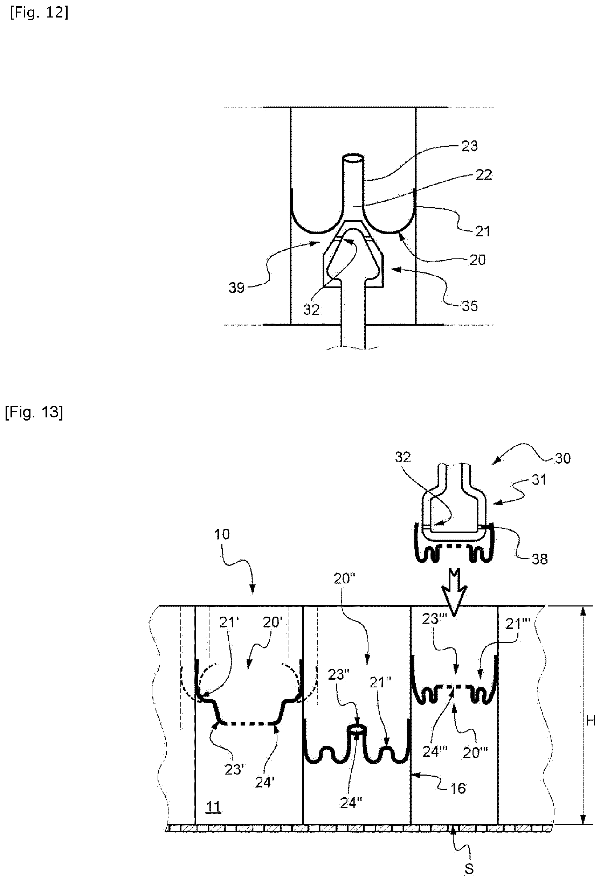

Une extrémité libre du tube, formant une sortie acoustique, peut comporter par exemple une section entièrement ouverte, un trou, comme représenté sur la figure 3, ou figure 13 pour le tube 23", ou elle pourrait comporter une paroi poreuse, un ensemble de micro-perforations, ou un tissage, par exemple métallique, par exemple comme illustrée sur la figure 13, sous les références 23' et 23‴.

Un tel tube 23 est configuré pour maintenir une zone indéformable et favoriser une zone déformable autour de cette zone indéformable. Il permet de marquer une interface physique qui accentue une adaptabilité de la membrane en préservant la zone acoustique.

Il est ainsi possible de ne pas déformer la sortie acoustique, étant précisé qu'il est ici considéré qu'il n'y a pas de déformation de la zone acoustique dans une tolérance de moins de 10% de variation de section de la sortie acoustique, ce qui équivaut à environ 10% de perte de charge.

Selon une caractéristique du diaphragme selon ce mode de réalisation, la zone centrale acoustiquement ouverte, soit le tube 23, a une rigidité au moins égale à une rigidité de la membrane 21.

Cela peut par exemple être réalisé par une épaisseur plus importante pour cette zone centrale ouverte (le tube 23 en particulier) que pour la membrane 21 alors qu'ils sont réalisés en un même matériau.

La figure 3 montre une alvéole 11 telle que celles de la figure 2 en coupe.

Cette figure montre que le diaphragme 20 divise l'alvéole 11 en deux compartiments 14, 15. Le bord périphérique extérieur de la membrane est fixé à la paroi interne 16 de l'alvéole 11, entre les deux extrémités de ladite paroi 16 de l'alvéole dans la direction de la hauteur H de manière à pouvoir la diviser en deux compartiments 14, 15.

A partir d'une structure alvéolaire choisie, la membrane 21 est disposée dans l'alvéole 11 en fonction des fréquences acoustiques à traiter.

Par exemple, la membrane 21 est disposée selon une section de l'alvéole.

Dans un exemple de réalisation, une intersection entre la membrane 21 et la paroi interne de l'alvéole 11 est disposée parallèlement à la section de base S et à distance de la section de base S.

La membrane 21 comporte au moins une partie centrale ouverte, par exemple un orifice 22.

L'orifice 22 est ici centré par rapport à la section de l'alvéole où est disposée la membrane 21.

Le tube 23 surmonte l'orifice 22 et s'étend ici dans le compartiment 14.

En particulier, le tube 23 s'étend à partir d'un bord de l'orifice 22, de sorte qu'un diamètre de l'orifice 22 est égal à un diamètre interne d du tube 23.

Le tube 23 est ainsi également centré par rapport à la section de l'alvéole.

L'extrémité libre du tube 23 formant une sortie acoustique 24 peut comporter un trou (comme sur la figure 3, ou figure 13 pour le tube 23") ou un ensemble de micro-perforations, ou un tissage, par exemple métallique, par exemple tels que schématisés figure 13 (aux références 23' et 23‴).

Le tube 23, et en particulier la section de sortie acoustique 24, sont par exemple indéformables sous des sollicitations induites lors d'étapes d'insertion du diaphragme dans l'alvéole. Par exemple la section de sortie acoustique 24 demeure inchangée entre un état libre et lorsque le diaphragme est inséré dans l'alvéole dans une tolérance de 10% de variation de section de la sortie acoustique, ce qui équivaut à environ 10% de perte de charge.

Au besoin, une capacité d'adaptation du diaphragme est procurée par la membrane qui est configurée pour se déformer en fonction des dimensions et forme de l'alvéole.

Les deux compartiments 14, 15 communiquent alors acoustiquement, voire fluidiquement, entre eux par le tube 23.

Le compartiment 14, dans lequel s'étend le tube 23, est ainsi configuré pour traiter des fréquences basses tandis que le compartiment 15, situé de l'autre côté du diaphragme 20 dans l'alvéole 11, est configuré pour traiter des fréquences hautes.

Le tube 23 est ici cylindrique, par exemple à section circulaire. Selon un autre exemple de réalisation intéressant, il pourrait avoir une section hexagonale.

Le tube 23 a ici une hauteur e égale à au moins trois fois son diamètre, et en particulier au moins trois fois le diamètre de la section de sortie acoustique 24 du tube 23.

Le tube 23 a ici un diamètre interne de section constante sur toute sa hauteur e, ou par exemple constante sur au moins 50% de la hauteur e, à partir de la sortie acoustique 24.

Le diaphragme 20 est disposé dans l'alvéole 11 en fonction des fréquences à traiter. Ainsi, à partir d'une structure alvéolaire choisie, le diaphragme est par exemple disposé avec la sortie acoustique 24 à une distance p de la section de base S, qui est déterminée en fonction des fréquences à traiter.

Par exemple, la distance p est comprise entre 20 % et 80 % de la hauteur H.

Le diaphragme est par exemple disposé avec la sortie acoustique 24 à un tiers de la hauteur, ou deux tiers ou à mi-hauteur selon une spécification acoustique donnée et des dimensions (hauteur et section) de l'alvéole de la structure alvéolaire considérée. Dans le présent exemple illustré sur les figures, la membrane 21 est située environ à mi-hauteur de l'alvéole, soit à environ 50 % de la hauteur H à partir de la section de base S, et la sortie acoustique 24 est ici à environ 25% de la hauteur.

Un volume de chacun des compartiments 14, 15 varie donc en conséquence et sont ici sensiblement équivalents.

Une telle structure alvéolaire avec un diaphragme permet ainsi de traiter une plus large gamme de fréquences acoustiques qu'une même structure alvéolaire sans diaphragme.

Un diaphragme selon l'invention permet ainsi un dimensionnement acoustique plus simple. Les ondes acoustiques sont canalisées par le tube. Un tel diaphragme est plus robuste industriellement car il est plus facile de s'assurer que les ondes acoustiques sont reprises par le tube, ce qui est moins dépendant de la forme et de la taille de la section des alvéoles. En outre, un tel diaphragme peut être adapté à un grand nombre d'alvéoles, différentes en forme et en dimensions.

La figure 4 montre un aéronef biréacteur ayant deux nacelles 200 qui possèdent une entrée d'air 201.

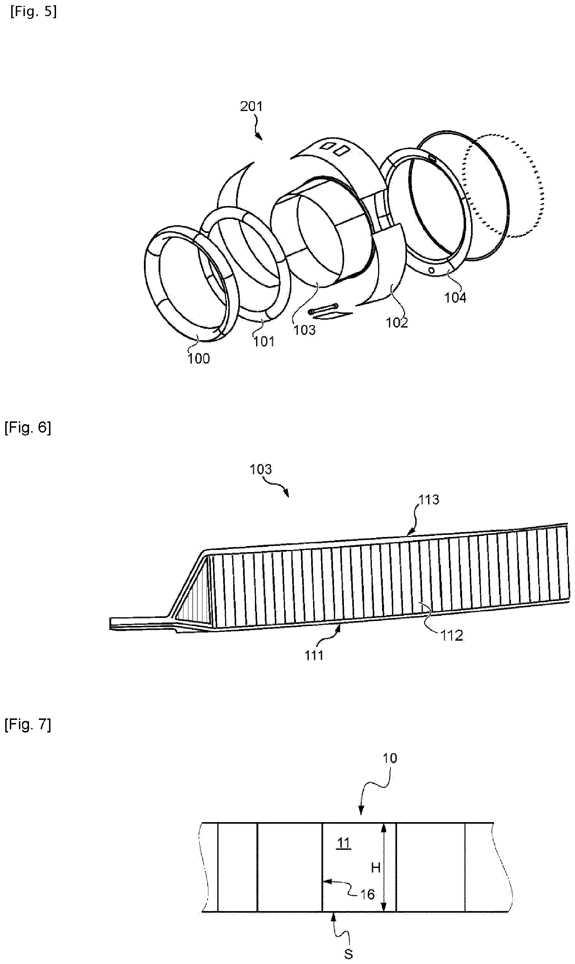

La figure 5 montre, en éclaté, une entrée d'air 201 de nacelle 200 d'ensemble propulsif d'aéronef tel que représenté figure 4.

L'entrée d'air 201 comprend des éléments de structure tels qu'un cadre avant 101 et un cadre arrière 104, ainsi que, d'amont en aval de la nacelle 200, une lèvre 100 portée par le cadre avant 101, des panneaux externes 102 prolongeant la lèvre 100 à l'extérieur de la nacelle 200 (et formant une paroi externe de l'entrée d'air), une paroi interne 103 prolongeant la lèvre à l'intérieur de la nacelle et délimitant un conduit central permettant de canaliser l'air en direction du moteur, les panneaux externes et la paroi interne étant portés par le cadre avant 101 et le cadre arrière 104.

La forme de l'entrée d'air et les systèmes dont elle est équipée doivent permettre d'éviter la formation et/ou l'accumulation de glace ou givre, d'assurer une fonction aérodynamique, de prévenir la pénétration d'oiseaux dans le compartiment de soufflante contenant les systèmes moteurs, ainsi que de limiter l'impact des nuisances sonores.

Pour remplir ce dernier objectif, la paroi interne 103 est un panneau acoustique, représenté par exemple figure 6 en coupe.

Le panneau acoustique 103 comporte alors une structure alvéolaire telle que décrite précédemment, soit par exemple :
- une peau dite acoustique ou résistive 111, poreuse, perforée ou micro-perforée, qui forme par exemple une face visible du panneau (c'est-à-dire une face orientée vers l'intérieur du conduit central de l'entrée d'air) ; l'objectif de cette peau résistive est de laisser passer les ondes sonores et éventuellement aussi de dissiper au moins partiellement l'énergie de celles-ci sous forme thermique,
- une peau arrière 113, qui a essentiellement pour fonction d'assurer la tenue structurale du panneau acoustique, et
- une âme 112, de part et d'autre de laquelle sont fixées la peau résistive 111 et la peau arrière 113, laquelle âme participe à la fois à la tenue mécanique et à l'amortissement acoustique, la fonction principale de l'âme étant d'emprisonner et amortir les ondes sonores.

Ici, l'âme 112 comporte des alvéoles avec diaphragme selon un des exemples de réalisation de l'invention.

Dans le cas où le panneau acoustique est en zone pouvant capter de la glace ou du ruissellement, ce panneau peut incorporer un élément chauffant, par exemple sous forme de tube ou de fil chauffants.

Toutefois, un panneau acoustique pouvant être formé à partir de diverses structures alvéolaires de base, dont les alvéoles peuvent être munies de différents diaphragmes, il est intéressant de pouvoir disposer d'un procédé de réalisation d'au moins la structure alvéolaire d'insonorisation et d'un outil d'insertion de diaphragmes qui soient adaptables à différentes configurations.

La figure 7 montre schématiquement une coupe d'alvéoles 11 d'une structure alvéolaire de base, par exemple telle qu'illustrée figure 1 ou de toute autre forme de section de base S ou hauteur H.

Chaque alvéole 11 présente une paroi interne 16.

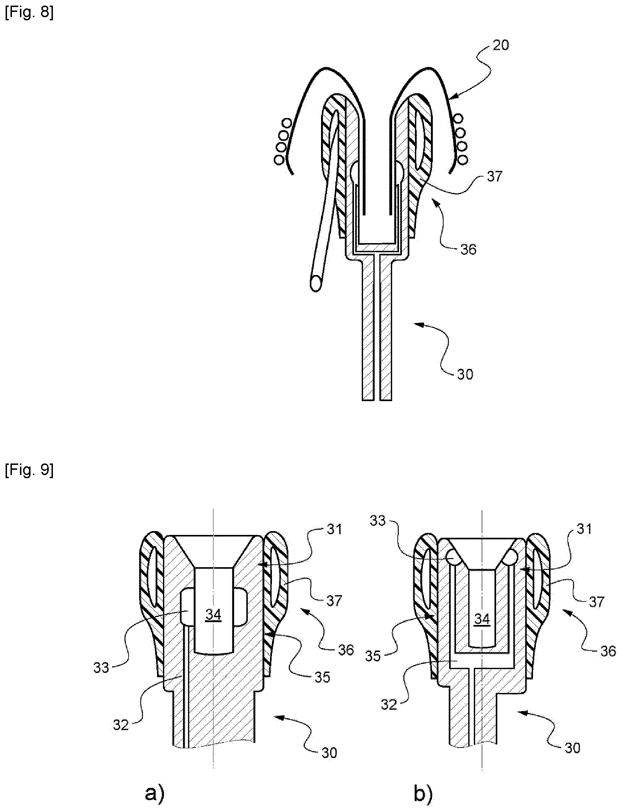

Afin de positionner un diaphragme 20 dans une alvéole 11 telle que schématisée figure 7, la figure 8 illustre une étape de prise du diaphragme 20 par un outil d'insertion 30 selon un exemple de réalisation de l'invention.

Un tel outil d'insertion 30 est par exemple schématisé figures 9 a) et b), selon deux variantes de réalisation.

L'outil d'insertion 30 selon l'invention comporte au moins un embout 31 qui est configuré pour s'insérer dans l'alvéole 11, avec le diaphragme 20.

L'embout 31 comporte par exemple un système de préhension qui est configuré pour maintenir une partie du diaphragme 20, et le relâcher.

Dans l'exemple de réalisation schématisé sur les figures, le système de préhension comporte au moins un canal 32, dit canal d'aspiration 32, qui est configuré pour être mis au moins en dépression.

Le canal d'aspiration 32 est ainsi configuré pour maintenir le diaphragme 20 par aspiration, par effet ventouse.

Sur ces figures, l'embout 31 comporte un alésage 34 qui s'étend depuis un sommet de l'embout 31.

Un tel alésage 34 est configuré pour recevoir un tube du diaphragme, par exemple un tube 23 d'un diaphragme 20 tel que représenté figures 2 et 3.

Pour un tel diaphragme, il peut alors être particulièrement commode de le maintenir par le tube.

Pour cela, le canal d'aspiration 32 débouche dans l'alésage 34.

En particulier, le canal d'aspiration 32 débouche dans une gorge 33 creusée dans une paroi de l'alésage 34, ici tout autour de l'alésage 34, pour que l'aspiration puisse être réalisée tout autour d'une partie du tube.

Pour un maintien du diaphragme 20 limitant des risques d'endommagement du diaphragme 20, en particulier à une interface entre le tube et la membrane qui peuvent être réalisés conjointement d'une seule pièce ou de manières dissociées et assemblés ultérieurement, l'alésage 34 comporte une partie profonde, cylindrique, et une partie débouchante, évasée, ici tronconique par exemple.

Dans l'exemple de réalisation de la figure 9 a), la gorge 33 est creusée dans la partie profonde, cylindrique, de sorte qu'elle se retrouverait en vis-à-vis d'une paroi latérale du tube lorsqu'un diaphragme est pris par l'outil.

Dans l'exemple de réalisation de la figure 9 b), la gorge 33 est creusée dans la partie débouchante, tronconique, de sorte qu'elle se retrouverait alors en vis-à-vis d'une extrémité du tube lorsqu'un diaphragme est pris par l'outil, voire une interface entre le tube et la membrane. Une telle configuration est par exemple intéressante pour un diaphragme ayant un tube de faible hauteur.

Extérieurement, l'embout 31 comporte une paroi latérale 35.

La paroi latérale externe 35 est par exemple cylindrique pour pouvoir être insérée facilement dans tous types d'alvéoles.

Selon une option intéressante, l'embout 31 comporte ici un système d'application de pression 36, disposé sur la paroi latérale externe 35.

Un tel système d'application de pression 36 est principalement configuré pour plaquer et presser une partie du diaphragme 20 contre la paroi interne 16 de l'alvéole 11, notamment pour la l'y fixer.

Dans l'exemple de réalisation illustré figures 9 a) et 9 b), le système d'application de pression 36 comporte une vessie gonflable 37.

La vessie gonflable 37 est alors configurée pour être gonflée pour presser une partie du diaphragme 20 contre la paroi 16 de l'alvéole lorsque le diaphragme est positionné dans l'alvéole 11, et pour être dégonflée sinon.

Selon un autre exemple de réalisation représenté figure 13, le système d'application de pression peut comporter un canal d'injection 38 configuré pour fournir un air sous pression.

Eventuellement, dans cet exemple de réalisation, le canal d'injection 38 et le canal d'aspiration 32 sont formés par un seul et même canal qui est sélectivement mis en dépression ou alimenté en air sous pression.

Ainsi, lors d'une première étape, l'outil d'insertion 30 est configuré pour prendre et maintenir un diaphragme 20 par aspiration d'une partie du diaphragme 20 grâce au canal d'aspiration 32, ce qui crée un effet ventouse.

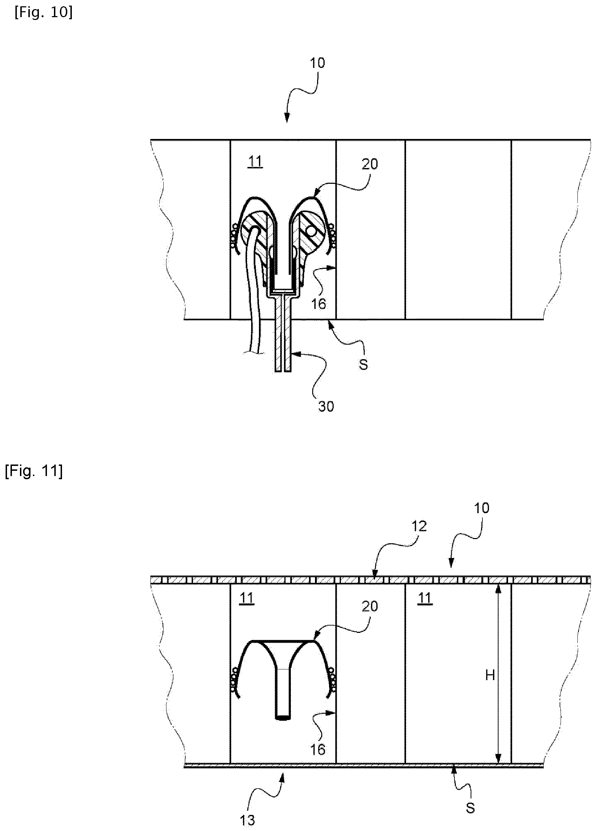

La figure 10 illustre ensuite une étape d'insertion du diaphragme 20 dans une alvéole 11 par l'outil d'insertion 30 qui le maintient par dépression dans le canal d'aspiration 32.

Dans cet exemple, l'étape d'insertion du diaphragme 20 dans l'alvéole 11 comporte une étape de poussée du diaphragme 20 dans l'alvéole 11 par l'outil d'insertion 30. Comme illustré ici, lorsque la membrane est plus grande qu'une section correspondante de l'alvéole, une partie de la membrane du diaphragme se retrouve alors repliée d'un même côté que le tube, chapeautant ainsi l'outil d'insertion 30.

Une fois le diaphragme 20 à la position souhaitée dans l'alvéole 11, le procédé peut comporter une étape de pression de la partie du diaphragme 20 contre la paroi 16 de l'alvéole 11 pour sa fixation.

Lorsque la membrane est plus grande que la section de l'alvéole, elle peut se plaquer naturellement contre la paroi interne 16 de l'alvéole par retour élastique.

La pression est par exemple réalisée ici par le système d'application de pression 36 de l'outil d'insertion 30 qui vient plaquer la partie du diaphragme 20 contre la paroi 16 de l'alvéole 11.

Dans l'exemple illustré, la vessie gonflable 37 est gonflée et plaque une partie de la membrane 21 contre la paroi 16 de l'alvéole 11.

Simultanément ou ultérieurement, le procédé comporte alors une étape de fixation de la partie du diaphragme 20, éventuellement pressée contre la paroi 16 de l'alvéole 11. La fixation peut être réalisée par collage, par exemple par un adhésif, lequel comporte par exemple une résine, ou par soudage par exemple, ou tout autre moyen.

Il s'agit par exemple d'un adhésif de type résine époxy.

Si le diaphragme est de dimension inférieure à la section correspondante de l'alvéole, le procédé peut comporter une étape d'injection d'un adhésif, comblant un éventuel interstice entre un pourtour de la membrane et la paroi interne 16 de l'alvéole, et fixant le diaphragme dans l'alvéole.

Il s'agit par exemple d'un adhésif de type résine époxy, d'un adhésif souple ou d'un élastomère qui permet de combler un tel interstice.

L'adhésif peut avantageusement être apporté par pulvérisation ou trempage sur les surfaces externes de la membrane 21.

Avant ou après l'étape de fixation, le procédé comporte par exemple une étape de relâchement du diaphragme 20 par l'outil d'insertion 30.

Pour cela, cette étape comporte au moins une étape d'arrêt d'aspiration par l'outil d'insertion 30 et éventuellement une étape d'arrêt d'application de pression par le système d'application de pression 36 ; par exemple la vessie gonflable 37 est dégonflée.

Le canal d'aspiration 32 est alors remis à la pression ambiante par exemple. Optionnellement, le canal d'aspiration 32 peut aussi être configuré pour insuffler une légère pression d'air pour libérer le diaphragme plus rapidement, voire éviter une adhérence entre le diaphragme 20 et l'outil d'insertion 30.

La figure 11 illustre schématiquement le diaphragme 20 en place dans l'alvéole 11, dégagé de l'outil d'insertion 30.

Avec un tel procédé, il est notamment possible d'insérer plus d'un diaphragme, quel qu'il soit, dans une même alvéole 11.

Il est ensuite possible de poursuivre la réalisation de la structure alvéolaire d'insonorisation.

Par exemple, le procédé comporte ensuite une étape d'application d'une feuille résistive 12 qui recouvre les alvéoles 11, incluant le diaphragme, d'un premier côté de la structure alvéolaire 10.

La feuille résistive 12 peut éventuellement être perforée. Elle forme une surface résistive permettant la communication des alvéoles 11 avec un environnement extérieur.

Le procédé peut aussi comporter une étape d'application d'une feuille de fermeture 13 qui ferme les alvéoles 11 d'un deuxième côté de la structure alvéolaire.

La feuille de fermeture 13 peut être une feuille pleine. Néanmoins, il peut s'agir d'une feuille présentant des perforations. Une feuille pleine est généralement employée pour des traitements acoustiques simples, dits SDOF (« Single Degree of Freedom ») et forme une peau arrière configurée pour réfléchir des ondes acoustiques. Une feuille de fermeture perforée est généralement employée pour des traitements acoustiques dits DDOF (« Double Degree of Freedom ») pour lesquels un empilement de deux étages de nid d'abeille est réalisé, les étages étant séparés par une peau poreuse intermédiaire formée par ladite feuille de fermeture 13.

La figure 12 montre un autre exemple de mise en oeuvre de la présente invention.

Sur cette figure, la paroi latérale externe 35 de l'embout 31 de l'outil d'insertion 30 comporte une partie tronconique 39, dont une section rétrécit en direction du sommet de l'outil d'insertion 30.

En outre, l'embout 31 de l'outil d'insertion 30 diffère de ceux de la figure 9 en ce que le canal d'aspiration 32 débouche sur une partie de la paroi latérale externe 35, c'est-à-dire vers l'extérieur et non vers l'intérieur comme sur la figure 9, et en particulier ici, le canal d'aspiration 32 débouche sur la partie tronconique 39.

Un outil tel que celui représenté figure 12 est par exemple utile pour prendre et maintenir un diaphragme 20 d'un côté opposé de la membrane 21 par rapport à celui à partir duquel s'étendrait un tube 23.

La partie tronconique 39 est alors configurée pour se placer sous une extrémité du tube 23 à l'interface avec la membrane 21, par exemple autour d'un orifice 22.

L'outil d'insertion 30 maintient alors le diaphragme 20 par aspiration d'une partie du diaphragme 20 autour de l'orifice 22.

Dans l'exemple représenté, l'outil d'insertion 30 permet d'insérer le diaphragme 20 dans l'alvéole 11 par traction.

Eventuellement, le canal d'aspiration 32 peut aussi être configuré pour insuffler une pression d'air pour libérer le diaphragme 20 plus rapidement, voire éviter une adhérence entre le diaphragme 20 et l'outil d'insertion 30.

Enfin, la figure 13 montre des diaphragmes 20', 20", 20'" et un outil d'insertion 30 selon d'autres exemples de mise en oeuvre de l'invention.

Le diaphragme 20' comporte ici par exemple une membrane 21' et un tube 23' dont l'extrémité libre formant une sortie acoustique 24' comporte ici une pluralité de micro-perforations.

Le diaphragme 20" comporte ici par exemple une membrane 21" qui comporte une ondulation, et un tube 23", ici analogue au tube 23 décrit précédemment, dont la sortie acoustique 24" comporte un trou de dimension égale à celle d'un diamètre du tube 23".

Le diaphragme 20'" comporte ici une membrane 21‴ qui comporte une ondulation, comme la membrane 21", et un tube 23'" dont la sortie acoustique 24'" comporte une pluralité de micro-perforations, de manière analogue à celle du tube 23'.

Selon des exemples de réalisation non représentés, la sortie acoustique du tube pourrait comporter une zone tissée.

Chacun de ces diaphragme 20', 20", 20'" peut possiblement être inséré dans une alvéole 11 par un outil d'insertion 30 selon l'invention, par exemple tel qu'illustré ici. En outre, dans cet exemple, l'embout 31 est par exemple configuré pour maintenir le diaphragme 20', 20", 20'" par une partie de sa membrane 21', 21", 21‴, notamment proche de sa périphérie.

Pour cela, comme dans l'exemple de la figure 12, le canal d'aspiration 32 débouche ici sur une partie de la paroi latérale externe 35.

De même que précédemment, le canal d'aspiration 32 peut éventuellement être aussi configuré pour insuffler une pression d'air pour libérer le diaphragme 20', 20", 20'" plus rapidement, voire éviter une adhérence entre le diaphragme 20', 20", 20'" et l'outil d'insertion 30.

En outre, le canal d'aspiration 32 peut aussi être configuré pour permettre une injection plus puissante, par exemple un air sous forte pression, et ainsi former un canal d'injection 38 d'un système d'application de pression configuré pour fournir un air sous pression pour presser une partie de la membrane 21', 21", 21‴ contre la paroi 16 de l'alvéole 11.

Selon un exemple de réalisation, l'au moins une ondulation peut être statique.

Selon un autre exemple de réalisation, l'au moins une ondulation peut être configurée pour permettre un déploiement de la membrane.

Dans ce cas, le procédé peut comporter une étape d'aspiration, par exemple au cours d'une étape de cuisson, pour déployer le diaphragme.

Ceci permet notamment de fabriquer et stocker le diaphragme sur une moindre hauteur, ce qui permet un gain de place.

## Revendications

1. Structure alvéolaire d'insonorisation (10) comportant des alvéoles (11) ayant une section de base (S) de forme quelconque et une hauteur (H), **caractérisée en ce que** chacune de ces alvéoles (11) comporte un diaphragme (20), le diaphragme (20) comportant une membrane (21), divisant l'alvéole (11) en deux compartiments (14, 15) selon la hauteur (H), la membrane (21) comportant au moins un orifice (22) traversant une épaisseur de la membrane, et le diaphragme (20) comportant au moins un tube (23), entourant l'au moins un orifice (22) et s'étendant depuis une face de la membrane (21) dans un des deux compartiments (14), le tube (23) comportant une extrémité libre formant une sortie acoustique (24) qui est positionnée à distance (p) de la section de base (S), la membrane (21) comportant au moins une ondulation.

2. Structure alvéolaire d'insonorisation (10) selon la revendication 1, **caractérisée en ce que** la distance (p) entre la section acoustique (24) et la section de base (S) de l'alvéole (11) vaut entre 20 % et 80 % de la hauteur (H) de l'alvéole (11).

3. Structure alvéolaire d'insonorisation (10) selon l'une quelconque des revendications 1 ou 2, dans lequel la sortie acoustique (24) du tube (23) comporte au moins un orifice, des micro-perforations et/ou une zone tissée.

4. Structure alvéolaire d'insonorisation (10) selon l'une quelconque des revendications 1 à 3, **caractérisée en ce qu'**elle comporte une feuille résistive (12) recouvrant l'alvéole (11) d'un premier côté et une feuille de fermeture (13) recouvrant l'alvéole (11) d'un deuxième côté, la feuille de fermeture (13) étant perforée.

5. Aéronef comprenant au moins un ensemble propulsif comprenant une nacelle (200), la nacelle (200) comprenant une entrée d'air (201) comportant un panneau acoustique (103), le panneau acoustique (103) comportant une structure alvéolaire (10) selon l'une quelconque des revendications 1 à 4, dont une peau acoustique (111) comporte la feuille résistive (12) et une peau arrière (113) configurée pour assurer une tenue structurale du panneau acoustique (103) comporte la feuille de fermeture (13).

6. Procédé de fabrication d'une structure alvéolaire d'insonorisation (10) comportant une étape de fourniture d'au moins une alvéole (11) ayant une section de base (S) de forme quelconque et une hauteur (H) **caractérisé en ce qu'**il comprend :
- Une étape de fourniture d'un diaphragme (20) comportant une membrane (21), la membrane (21) comportant au moins une ondulation et au moins un orifice (22) traversant une épaisseur de la membrane, et le diaphragme (20) comportant au moins un tube (23) surmontant l'orifice (22), le tube comportant une extrémité libre formant une sortie acoustique (24) ;
- Une étape de prise du diaphragme (20) par un outil d'insertion (30) comportant une étape de préhension d'une partie du diaphragme (20) par l'outil d'insertion (30) ;
- Une étape d'insertion du diaphragme (20) dans l'alvéole (11) par l'outil d'insertion (30) jusqu'à positionner la sortie acoustique (24) à une distance (p) de la section de base (S) ;
- Une étape de fixation d'une partie du diaphragme (20) contre une paroi (16) de l'alvéole (11) ; et
- Une étape de relâchement du diaphragme (20) par l'outil d'insertion (30).

7. Procédé selon l'une quelconque la revendication 6, comportant une étape de pression de la partie du diaphragme (20) contre la paroi (16) de l'alvéole (11) pour sa fixation par un système d'application de pression (36) de l'outil d'insertion (30).

8. Outil d'insertion (30) d'un diaphragme (20) dans une alvéole (11) d'une structure alvéolaire d'insonorisation (10) selon l'une quelconque des revendications 1 à 4, l'outil d'insertion (30) comportant au moins un embout (31) configuré pour s'insérer dans l'alvéole (11), l'embout (31) comportant au moins un système de préhension configuré pour maintenir une partie du diaphragme (20) ou le relâcher.

9. Outil d'insertion (30) selon la revendication 8, **caractérisé en ce que** l'embout (31) comporte un système d'application de pression (36) configuré pour plaquer une partie de la membrane (21) contre la paroi interne (16) de l'alvéole (11).

## Patentansprüche

1. Schalldämmende Wabenstruktur (10), umfassend Wabenzellen (11) mit einem Basisabschnitt (S) beliebiger Form und einer Höhe (H), **dadurch gekennzeichnet, dass** jede dieser Wabenzellen (11) eine Scheidewand (20) umfasst, wobei die Scheidewand (20) eine Membran (21) umfasst, welche die Wabenzelle (11) in zwei Kammern (14, 15) in der Höhe (H) unterteilt, wobei die Membran (21) mindestens eine eine Dicke der Membran durchdringende Öffnung (22) umfasst, und wobei die Scheidewand (20) mindestens ein Rohr (23) umfasst, das die mindestens eine Öffnung (22) umschließt und sich aus einer Fläche der Membran (21) in eine der beiden Kammern (14) erstreckt, wobei das Rohr (23) ein freies Ende umfasst, das einen akustischen Ausgang (24) bildet, der im Abstand (p) von dem Basisabschnitt (S) positioniert ist, wobei die Membran (21) mindestens eine Welligkeit umfasst.

2. Schalldämmende Wabenstruktur (10) nach Anspruch 1, **dadurch gekennzeichnet, dass** der Abstand (p) zwischen dem akustischen Abschnitt (24) und dem Basisabschnitt (S) der Wabenzelle (11) zwischen 20% und 80% der Höhe (H) der Wabenzelle (11) beträgt.

3. Schalldämmende Wabenstruktur (10) nach einem der Ansprüche 1 oder 2, wobei der akustische Ausgang (24) des Rohrs (23) mindestens eine Öffnung, Mikroperforationen und/oder eine gewebte Zone umfasst.

4. Schalldämmende Wabenstruktur (10) nach einem der Ansprüche 1 bis 3, **dadurch gekennzeichnet, dass** sie eine die Wabenzelle (11) auf einer ersten Seite abdeckende Widerstandsfolie (12) und eine die Wabenzelle (11) auf einer zweiten Seite abdeckende Verschlussfolie (13) umfasst, wobei die Verschlussfolie (13) perforiert ist.

5. Luftfahrzeug, umfassend mindestens eine Antriebsbaugruppe, umfassend eine Gondel (200), wobei die Gondel (200) einen Lufteinlass (201) umfasst, der eine Akustikplatte (103) umfasst, wobei die Akustikplatte (103) eine Wabenstruktur (10) nach einem der Ansprüche 1 bis 4 umfasst, deren eine Akustikhaut (111) die Widerstandsfolie (12) umfasst und eine hintere Haut (113), die ausgelegt ist, einen strukturellen Halt der Akustikplatte (103) zu gewährleisten, die Verschlussfolie (13) umfasst.

6. Verfahren zur Herstellung einer schalldämmenden Wabenstruktur (10), umfassend einen Schritt der Bereitstellung von mindestens einer Wabenzelle (11) mit einem Basisabschnitt (S) beliebiger Form und einer Höhe (H), **dadurch gekennzeichnet, dass** es aufweist:
Einen Schritt der Bereitstellung einer Scheidewand (20), umfassend eine Membran (21), wobei die Membran (21) mindestens eine Welligkeit und mindestens eine eine Dicke der Membran durchdringende Öffnung (22) umfasst, und wobei die Scheidewand (20) mindestens ein die Öffnung (22) überragendes Rohr (23) umfasst, wobei das Rohr ein einen akustischen Ausgang (24) bildendes freies Ende umfasst;
Einen Schritt der Aufnahme der Scheidewand (20) durch ein Einfügungswerkzeug (30), umfassend einen Schritt des Greifens eines Teils der Scheidewand (20) durch das Einfügungswerkzeug (30);
Einen Schritt des Einfügens der Scheidewand (20) in die Wabenzelle (11) durch das Einfügungswerkzeug (30), bis der akustische Ausgang (24) in einem Abstand (p) von dem Basisabschnitt (S) positioniert ist;
Einen Schritt des Befestigens eines Teils der Scheidewand (20) an einer Wand (16) der Wabenzelle (11); und
Einen Schritt des Freigebens der Scheidewand (20) durch das Einfügungswerkzeug (30).

7. Verfahren nach Anspruch 6, umfassend einen Schritt des Drückens des Teils der Scheidewand (20) gegen die Wand (16) der Wabenzelle (11) zu deren Befestigung durch ein Druckbeaufschlagungssystem (36) des Einfügungswerkzeugs (30).

8. Werkzeug zum Einfügen (30) einer Scheidewand (20) in eine Wabenzelle (11) einer schalldämmenden Wabenstruktur (10) nach einem der Ansprüche 1 bis 4, wobei das Einfügungswerkzeug (30) mindestens ein Ansatzstück (31) umfasst, das ausgelegt ist, sich in die Wabenzelle (11) einzufügen, wobei das Ansatzstück (31) mindestens ein Greifsystem umfasst, das ausgelegt ist, einen Teil der Scheidewand (20) festzuhalten oder freizugeben.

9. Einfügungswerkzeug (30) nach Anspruch 8, **dadurch gekennzeichnet, dass** das Ansatzstück (31) ein Druckbeaufschlagungssystem (36) umfasst, das ausgelegt ist, einen Teil der Membran (21) gegen die Innenwand (16) der Wabenzelle (11) zu drücken.

## Claims

1. Cellular soundproofing structure (10) having cells (11) having a base section (S) of any shape and a height (H), **characterized in that** each of these cells (11) has a diaphragm (20), the diaphragm (20) having a membrane (21), dividing the cell (11) into two compartments (14, 15) in terms of the height (H), the membrane (21) having at least one orifice (22) passing through a thickness of the membrane, and the diaphragm (20) having at least one tube (23), surrounding the at least one orifice (22) and extending from a face of the membrane (21) into one of the two compartments (14), the tube (23) having a free end forming an acoustic outlet (24) that is positioned at a distance (p) from the base section (S), the membrane (21) having at least one corrugation.

2. Cellular soundproofing structure (10) according to Claim 1, **characterized in that** the distance (p) between the acoustic section (24) and the base section (S) of the cell (11) is between 20% and 80% of the height (H) of the cell (11).

3. Cellular soundproofing structure (10) according to either of Claims 1 and 2, wherein the acoustic outlet (24) of the tube (23) has at least one orifice, microperforations and/or a woven zone.

4. Cellular soundproofing structure (10) according to any one of Claims 1 to 3, **characterized in that** it has a resistive sheet (12) covering the cell (11) on a first side and a closure sheet (13) covering the cell (11) on a second side, the closure sheet (13) being perforated.

5. Aircraft comprising at least one propulsion assembly comprising a nacelle (200), the nacelle (200) comprising an air inlet (201) having an acoustic panel (103), the acoustic panel (103) having a cellular structure (10) according to any one of Claims 1 to 4, of which an acoustic skin (111) includes the resistive sheet (12) and a rear skin (113) configured to ensure structural integrity of the acoustic panel (103) includes the closure sheet (13).

6. Method for manufacturing a cellular soundproofing structure (10), involving a step of providing at least one cell (11) having a base section (S) of any shape and a height (H), **characterized in that** it comprises:
- a step of providing a diaphragm (20) having a membrane (21), the membrane (21) having at least one corrugation and at least one orifice (22) passing through a thickness of the membrane, and the diaphragm (20) having at least one tube (23) surmounting the orifice (22), the tube having a free end forming an acoustic outlet (24);
- a step of taking the diaphragm (20) using an insertion tool (30), involving a step of gripping a part of the diaphragm (20) using the insertion tool (30) ;
- a step of inserting the diaphragm (20) into the cell (11) using the insertion tool (30) until the acoustic outlet (24) is positioned at a distance (p) from the base section (S);
- a step of fastening a part of the diaphragm (20) against a wall (16) of the cell (11); and
- a step of releasing the diaphragm (20) using the insertion tool (30).

7. Method according to any one Claim 6, involving a step of pressing the part of the diaphragm (20) against the wall (16) of the cell (11) in order to fasten it using a pressure application system (36) of the insertion tool (30).

8. Tool (30) for inserting a diaphragm (20) into a cell (11) of a cellular soundproofing structure (10) according to any one of Claims 1 to 4, the insertion tool (30) having at least one endpiece (31) configured to be inserted into the cell (11), the endpiece (31) having at least one gripping system configured to hold a part of the diaphragm (20) or release it.

9. Insertion tool (30) according to Claim 8, **characterized in that** the endpiece (31) has a pressure application system (36) configured to press a part of the membrane (21) against the internal wall (16) of the cell (11) .
